# EUROPEAN PATENT APPLICATION

(11) **EP 2 853 964 A1**
(43) Date of publication of application: **01.04.2015**
(21) Application number: 13275231.2
(22) Date of filing: 30.09.2013
(51) Int. Cl.: G05B 19/4097

(54) **Information processing for producing an aircarft door or aircraft pannel**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

Disclosed is an information processing method comprising: acquiring, by one or more processors (30), measurements of a first surface (62) of a blank (60); acquiring, by the one or more processors (30), a digital model (34) of an object (4) that is to be produced from the blank (60); and, using the measurements of the first surface (62) of the blank (60), morphing, by the one or more processors (30), at least part of the digital model (34) such that a first surface of the digital model (70) is the same shape as the measured first surface (62) of the blank (60). The object (4) that is to be produced from the blank (60) may be an aircraft door or aircraft panel.

## Description

### FIELD OF THE INVENTION

The present invention relates to information processing.

### BACKGROUND

In the field of aircraft construction, fixed or hinged airframe panels, avionics bay doors and the like tend to be produced by machining a "blank" or workpiece into a desired final shape and size by a controlled material-removal process, i.e. by a subtractive manufacturing process.

The machining of a workpiece may be performed manually by human operators, e.g. using hand tools and workbenches, or using an automated machine tool or robot controlled by a computer.

Typically, during a machining process a secure fixture is used to that rigidly supports a workpiece so as to prevent it deflecting under the machining/drilling forces. Such fixtures, which are usually required to be bespoke for the shape of panel being drilled, tend to be expensive and may damage the work piece.

### SUMMARY OF THE INVENTION

In a first aspect, the present invention provides an information processing method comprising: acquiring, by one or more processors, measurements of a first surface of a blank; acquiring, by the one or more processors, a digital model of an object that is to be produced from the blank; and, using the measurements of the first surface of the blank, morphing, by the one or more processors, at least part of the digital model such that a first surface of the digital model is the same shape as the measured first surface of the blank.

The step of acquiring the measurements of the first surface may comprise attaching the blank to a fixture system so as to oppose deflection of the blank and, while the blank is attached to the fixture system, measuring, by a surface measurement device operatively coupled to the one or more processors, the first surface of the blank.

The fixture system may comprise a rigid base portion and a plurality of elongate support members, each support member being attached at one end to the base portion and extending away from the base portion. Attaching the blank to a fixture system may comprise fixedly attaching, using attachment means, the blank to distal ends of the support members.

The method may further comprise acquiring, by the one or more processors, measurements of a second surface of the blank, the second surface of the blank being different to the first surface of the blank. The step of morphing may be performed such that a second surface of the digital model is the same shape as the measured second surface of the blank, the second surface of the digital model being different to the first surface of the digital model.

The method may further comprise acquiring, by the one or more processors, a positional relationship between the first surface of the blank and the second surface of the blank. The step of morphing may be performed such that the first surface of the digital model and the second surface of the digital model have the same positional relationship as the first surface of the blank and the second surface of the blank.

The step of acquiring the positional relationship between the first surface of the blank and the second surface of the blank may comprise: measuring, by a further surface measurement device operatively coupled to the one or more processors, the first surface of the blank and the second surface of the blank; and, using the measurements taken by the further surface measurement device, determining, by the one or more processors, the positional relationship between the first surface of the blank and the second surface of the blank.

The measurements of the blank taken by the further surface measurement device may be taken prior to the blank being attached to the fixture system.

The step of morphing may comprise deflecting the digital model.

In some aspects, only part of the digital model is morphed. The part of the digital model that is morphed may be at or proximate to a feature of the digital model that corresponds to a feature of the object that is to be within a narrower tolerance interval than a different part of the object.

The feature of the digital model may be a chamfer between two surfaces of the digital model.

The method may further comprise, using the morphed digital model, producing, by the one or more processors, instructions for a machining device, and controlling, by a controller operatively coupled to the one or more processors, the machining device to machine the blank in accordance with the instructions, thereby producing the object.

The object may be an aircraft door or aircraft panel. The digital model may be a digital model of the aircraft door or aircraft panel.

The method may further comprise, using the measurements of the first surface, assigning, by the one or more processors, a spatial position to the digital model. The instructions for the machining device may be produced using the spatial position assigned to the digital model in addition to the morphed digital model itself.

In a further aspect, the present invention provides apparatus for information processing, the apparatus comprising one or more processors arranged to: acquire measurements of a first surface of a blank; acquire a digital model of an object that is to be produced from the blank; and, using the measurements of the first surface of the blank, morph at least part of the digital model such that a first surface of the digital model is the same shape as the measured first surface of the blank.

In a further aspect, the present invention provides a program or plurality of programs arranged such that when executed by a computer system or one or more processors it/they cause the computer system or the one or more processors to operate in accordance with the method of any of the above aspects.

In a further aspect, the present invention provides a machine readable storage medium storing a program or at least one of the plurality of programs according to the preceding aspect.

In a further aspect, the present invention provides a method of producing an aircraft door or aircraft panel, the method comprising: acquiring, by one or more processors, measurements of a first surface of a blank for the aircraft door or aircraft panel; acquiring, by the one or more processors, a digital model of the aircraft door or aircraft panel; using the measurements of the first surface of the blank, morphing, by the one or more processors, at least part of the digital model such that a first surface of the digital model is the same shape as the measured first surface of the blank; using the morphed digital model, producing, by the one or more processors, instructions for a machining device; and controlling, by a controller operatively coupled to the one or more processors, the machining device to machine the blank in accordance with the instructions, thereby producing the aircraft door or aircraft panel.

In a further aspect, the present invention provides an aircraft door or aircraft panel produced by performing a method according to the preceding aspect.

### BRIEF DESCRIPTION OF THE DRAWINGS

Figure 1 is a schematic illustration (not to scale) of an aircraft door assembly;
Figure 2 is a schematic illustration (not to scale) of a system for producing the aircraft door assembly;
Figure 3 is a schematic illustration (not to scale) showing a fixture system;
Figure 4 is a schematic illustration (not to scale) showing a support member of the fixture system;
Figure 5 is a process flow chart showing certain steps of a process of producing the aircraft door assembly;
Figure 6 is a schematic illustration (not to scale) showing a blank workpiece;
Figure 7 is a schematic illustration (not to scale) showing a side view of the blank fixedly coupled to the fixture system; and
Figure 8 is a schematic illustration (not to scale) illustrating modification of a digital model of a door body of the aircraft door assembly.

### DETAILED DESCRIPTION

It will be appreciated that relative terms such as top and bottom, upper and lower, and so on, are used merely for ease of reference to the Figures, and these terms are not limiting as such, and any two differing directions or positions and so on may be implemented.

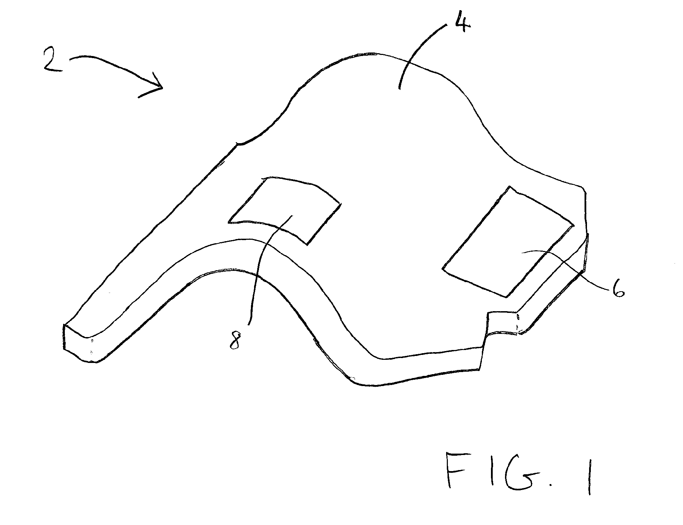

Figure 1 is a schematic illustration (not to scale) of an aircraft door assembly 2.

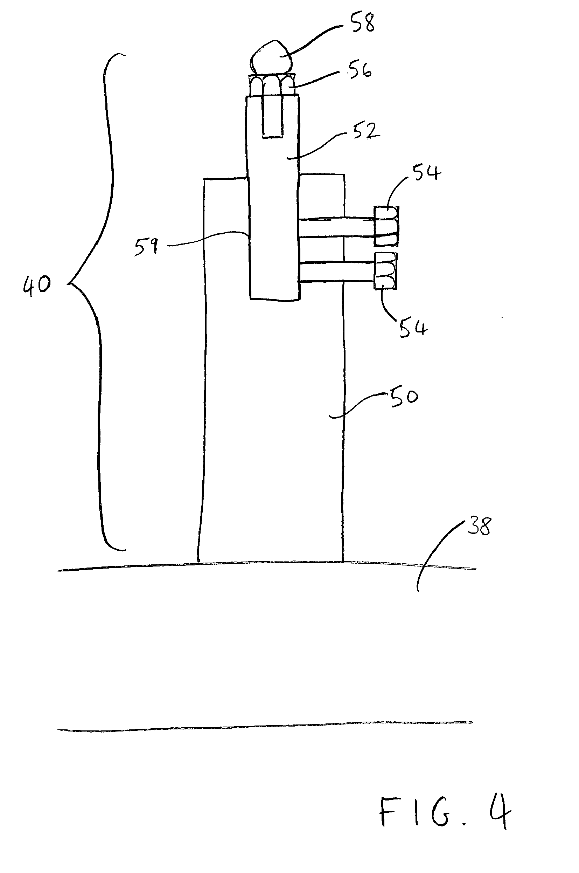

An embodiment of a process of producing the aircraft door assembly 2 is described in more detail later below with reference to Figure 4.

In this embodiment, the aircraft door assembly 2 comprises a door body 4, a hinge attachment device 6, and a lock attachment device 8.

In this embodiment, the door body 4 is made of titanium. However, in other embodiments, the door body 4 may be made of one or more different materials instead of or in addition to titanium.

In this embodiment, the hinge attachment device 6 is fixedly attached to the door body 4 using a plurality of bolts. However, in other embodiments, the hinge attachment device 6 is attached to the door body 4 in a different way, for example, by welding. The hinge attachment device 6 is a device via which the aircraft door assembly 2 may be coupled to a hinge that is attached to an airframe of an aircraft.

In this embodiment, the lock attachment device 8 is fixedly attached to the door body 4 using a plurality of bolts. However, in other embodiments, the lock attachment device 8 is attached to the door body 4 in a different way, for example, by welding. The lock attachment device 8 is a device via which the aircraft door assembly 2 may be coupled to a locking device (e.g. an "up-lock") configured to, when the aircraft door assembly 2 is attached to an airframe of an aircraft, releasably lock the aircraft door assembly in a fixed (e.g. closed) position relative to the airframe of the aircraft.

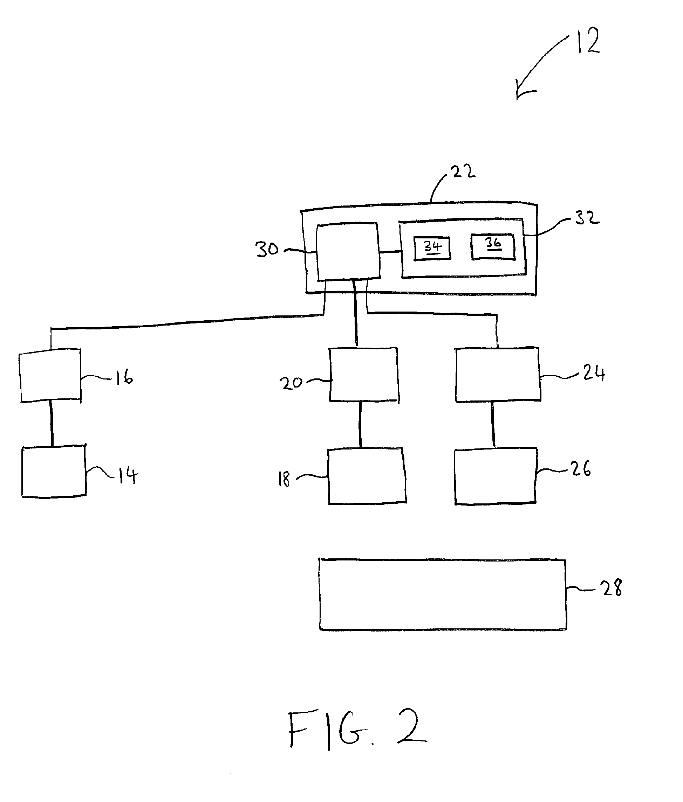

Figure 2 is a schematic illustration (not to scale) of a system 12 used in the production of the aircraft door assembly 2.

In this embodiment, the system 12 comprises a coordinate measuring machine (CMM) 14, a first computer 16, a surface measurement device 18, a second computer 20, a third computer 22, a control module 24, a machining device 26, and a fixture system 28.

The CMM 14 is a device for measuring physical geometrical characteristics of an object. Measurements of a surface of an object are taken by the CMM 14 using a moveable probe having six degrees of freedom. The probe of the CMM 14 may, for example, be a mechanical, optical, laser, or white light probe. The CMM 14 is coupled to the first computer 16 such that the first computer 16 may control the CMM 14 and such that measurements taken by the CMM 14 may be sent to the first computer 16. The measurements of a surface of an object taken by the CMM 14 are hereinafter referred to as "CMM data".

The first computer 14 is configured to process CMM data, for example, to produce CMM data in a format that is useable by the third computer 22. In addition to being coupled to the CMM 14, the first computer 14 is coupled to the third computer 22 such that processed CMM data may be sent from the first computer 14 to the third computer 22.

As described in more detail later below, the surface measurement device 18 is a device for measuring physical geometrical characteristics of at least an upper surface of an object that fixed to the fixture system 28. The surface measurement device 18 may be a 5-axis machine. In some embodiments, the surface measurement device 18 is the same device as the machining device 26, i.e. the machining device 26 has a measurement capability. Measurements of a surface of an object by the surface measurement device 18 are taken using a moveable probe. The probe of the surface measurement device 18 may, for example, be a mechanical, optical, laser, or white light probe. The surface measurement device 18 measures positions of points on a surface of an object relative to some reference point. The surface measurement device 18 is coupled to the second computer 20 such that the second computer 20 may control the surface measurement device 18 and such that measurements taken by the surface measurement device 18 may be sent to the second computer 20.

The second computer 20 is configured to process data received from the surface measurement device 18, for example, to convert that data into a format that is useable by the third computer 22. In addition to being coupled to the surface measurement device 18, the second computer 20 is coupled to the third computer 22 such that data may be sent from the second computer 20 to the third computer 22.

In this embodiment, the third computer 22 comprises a processor 30 and a memory 32. The processor 30 is connected to the memory 32 such that a digital model 34 and a computer numerical control (CNC) model 36 that are stored by the memory 32 may be acquired by the processor 30. As described in more detail later below with reference to Figure 4, the processor 30 is configured to, using data received from the first and second computers 16, 20, modify or update the digital model 34 and the CNC program 36.

In this embodiment, the digital model 34 is a model of the door body 4 of the aircraft door assembly 2. In particular, the digital model 34 specifies an outer surface of the door body 4 that is to be produced.

In this embodiment, the CNC program 36 specifies commands for controlling the machining device 26. The CNC program 36 is associated with the digital model 34 and comprises commands for controlling the machining device 26 to machine an object fixed to the fixture structure 28 into the shape specified by the digital model 34, i.e. so as to machine an object fixed to the fixture structure 28 so as to produce the door body 4. In other words, the CNC program 36 specifies a machining and drilling pattern for producing the door body 4 from an object fixed to the fixture system 28. In this embodiment, the CNC program 36 is written to the nominal design of the door body.

The control module 24 is connected to the processor 30 such that the processor 30 may send the CNC program 36 to the control module 24.The control module 24 is for controlling the machining device 26 in accordance with the received CNC program 36.

The machining device 26 is for machining an object fixed to the fixture system 28.

The terminology "machining" is used herein to refer to any subtractive manufacturing process including, but not limited to, turning, boring, drilling, milling, broaching, sawing, shaping, planing, reaming, tapping, cutting, countersinking, orbital drilling, and back-drilling. The terminology "machining" covers inter alia electrical discharge machining, electrochemical machining, electron beam machining, photochemical machining, and ultrasonic machining, as well as "conventional" mechanical machining.

The machining device 26 is any appropriate type of machining device 26, e.g. a five-axis machining device. The machining device 26 may include one or more machining tools or end effectors for machining an object fixed to the fixture system 28. The machining device 26 may include one or more different types of machining tools or end effectors.

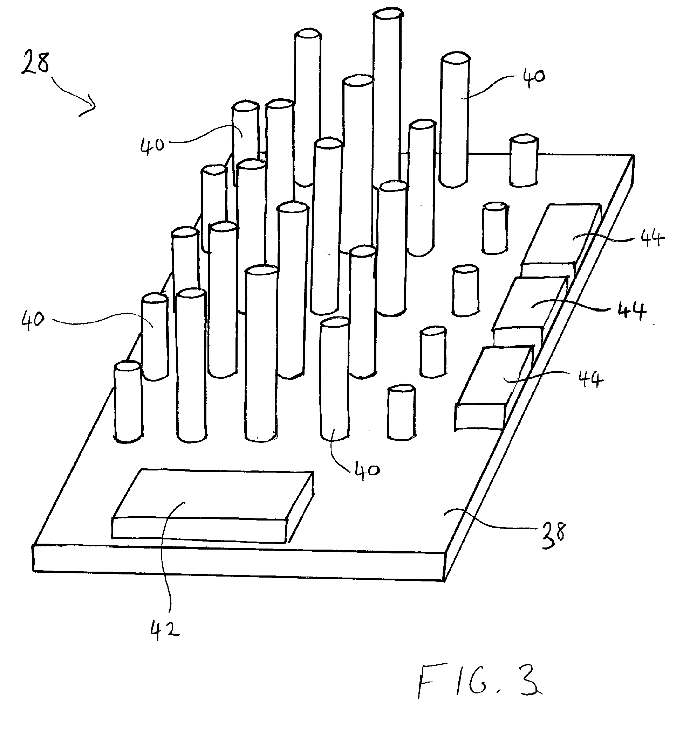

Figure 3 is a schematic illustration (not to scale) showing an embodiment of the fixture system 28.

In this embodiment, the fixture system 28 comprises a base plate 38, a plurality of elongate support members 40, a first block (hereinafter referred to as the "lock block" and indicated in the Figures by the reference numeral 42), and three further blocks (hereinafter referred to as "hinge blocks" and indicated in the Figures by the reference numeral 44).

The base plate 38 is a substantially rigid, rectangular piece of steel. The base plate 38 is relatively heavy such that sliding (i.e. translation) and rotation of the fixture system 28 during a machining process is opposed or prevented. The base plate 38 is relatively thick such that bending or deflection of the base plate 38 during a machining process is opposed or prevented.

For convenience and ease of illustration, in Figure 3, the fixture system 28 is shown as including twenty-five support members 40 arranged in a five-by- five grid configuration. However, it will be appreciated by the skilled person that the fixture system may comprise any number of support members 40 arranged in any pattern. Preferably, the fixture system includes seventy to one hundred support members 40, for example, ninety-six support members. Using a larger number of support members 40 advantageously tends to increase resistance to workpiece deflection under machining and drilling forces.

A support member 40 is described in more detail later below with reference to Figure 3.

Each support member 40 is a substantially cylindrical elongate member that is fixedly attached at a proximal end to an upper surface of the base plate 38. Each support member 40 extends away from the upper surface of the base plate 38 in a direction that is perpendicular to the upper surface of the base plate 38. In this embodiment, each support member 40 extends vertically away from the horizontal upper surface of the base plate 38.

In this embodiment, as described in more detail later below, the distal ends of the support members 40 provide a surface upon which an object that is to be machined may be attached, as described in more detail later below with reference to Figure 4. In this embodiment, the support members 40 are arranged in such a way that the surface defined by the distal ends of the support members 40 is the same shape as to surface of the object that is to be attached to the distal ends of the support members 40.

In some embodiments, the lengths of the support members (i.e. the heights of the distal ends of the support members above the upper surface of the base plate 38) are adjustable so that the fixture system 28 may be adjusted to receive objects having different shapes. However, in other embodiments, the lengths of the support members 40 are fixed and are selected based upon a known shape of an object that is to be fixed to the fixture system 28.

The lock block 42 is a cuboid-shaped block of steel fixedly attached to the base plate 38. As described in more detail later below, in operation, the lock block 42 is machined by the machining device 26 in accordance with the CNC program 36 so as to configure the lock block 42 to receive the lock attachment device 8 and, thereby, facilitate (e.g. guide) the attachment of the lock attachment device 8 to the door body 4. Thus, the CNC program 36 specifies a drilling and machining pattern for machining the lock block 42.

In some embodiments, the fixture system 28 does not include the lock block 42. In some embodiments, the fixture system 28 includes a plurality of lock blocks for facilitating the attachment of the lock attachment device 8 to the door body 4.

Each hinge block 44 is a cuboid-shaped block of steel fixedly attached to the base plate 38. As described in more detail later below, in operation, the hinge blocks 44 are machined by the machining device 26 in accordance with the CNC program 36 so as to configure the hinge blocks 44 to receive the hinge attachment device 6 and, thereby, facilitate (e.g. guide) the attachment of the hinge attachment device 6 to the door body 4. Thus, the CNC program 36 specifies a drilling and machining pattern for machining the hinge blocks block 44.

In some embodiments, the fixture system 28 does not include the hinge blocks 44. In some embodiments, the fixture system 28 includes a different number of hinge blocks for facilitating the attachment of the hinge attachment device 6 to the door body 4.

Figure 4 is a schematic illustration (not to scale) showing a support member 40.

The support member 40 comprises a first elongate member 50, a second elongate member 52, securing bolts 54, an end bolt 56, and an amount of adhesive 58.

The first member 50 is an elongate cylinder of steel that is fixedly attached, at its first end, to the upper surface of the base plate 38. The first member comprises a cavity 59 located at its second. The second end of the first member 50 is an opposite end to the first end of the first member 50. The second member 52 is fixedly coupled in the cavity 59 by the securing bolts 54.

The second member 52 is an elongate cylinder of steel that is fixedly coupled, at or proximate to its first end, to the second end of the first member 50. The second member 52 extends away from the second end of the first member 50. The further bolt 56 is fixedly coupled to the second end (or distal end) of the second member 52. The second end of the second member 52 is an opposite end to the first end of the second member 52.

The adhesive 58 is located on a distal end of the further bolt 56. In this embodiment, the adhesive 58 is an aerospace standard adhesive (for example, 3M Scotchweld E09323-2 B/A Black) that undergoes substantially no shrinkage when it dries. The adhesive 58 is for fixedly attaching an object to the distal end of the support member 40 (i.e. to an upper surface of the further bolt 56) in such a way that movement of the object relative to the support member 40 is substantially prevented during a process of machining that object.

Thus, a system 12 used in the production of the aircraft door assembly 2 is provided.

Apparatus, including any of all of the computers and/or the processor, for implementing the above arrangement, and performing the method steps to be described later below, may be provided by configuring or adapting any suitable apparatus, for example one or more computers or other processing apparatus or processors, and/or providing additional modules. The apparatus may comprise a computer, a network of computers, or one or more processors, for implementing instructions and using data, including instructions and data in the form of a computer program or plurality of computer programs stored in or on a machine readable storage medium such as computer memory, a computer disk, ROM, PROM etc., or any combination of these or other storage media.

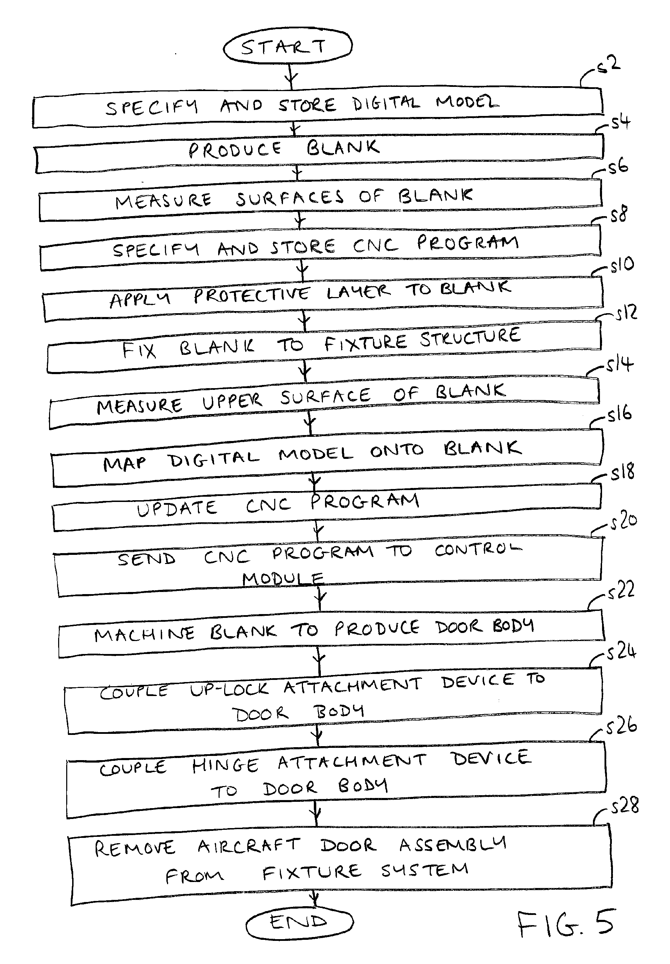

It should be noted that certain of the process steps depicted in the flowchart of Figure 5 and described above may be omitted or such process steps may be performed in differing order to that presented above and shown in Figure 5. Furthermore, although all the process steps have, for convenience and ease of understanding, been depicted as discrete temporally-sequential steps, nevertheless some of the process steps may in fact be performed simultaneously or at least overlapping to some extent temporally.

Figure 5 is a process flow chart showing certain steps of a process of producing the aircraft door assembly 2.

At step s2, the digital model 34 is specified and stored in the memory 32. The digital model 34 may be specified in any appropriate way, for example, by a human designer using a computer. In this embodiment, the digital model 34 is a Catia V5 solid model.

At step s4, a blank for the door body 4 is produced.

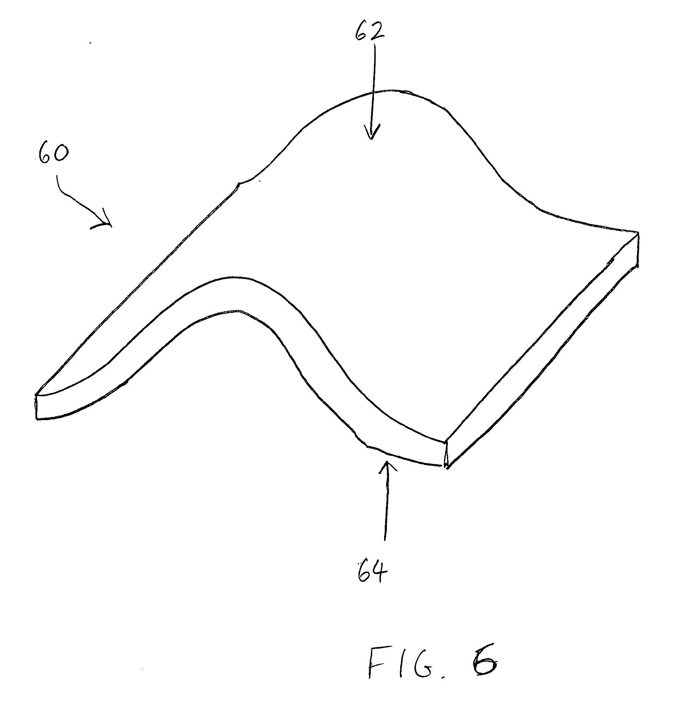

Figure 6 is a schematic illustration (not to scale) showing the blank 60.

In this embodiment, the blank 60 is a workpiece that is to be machined, by the machining device 26, into the shape specified by the digital model 34 so as to produce the door body 4.

In this embodiment, the blank 60 is a sheet of material that has a shape that approximates to that of the finished door body 4.

An upper surface of the blank 60 is indicated in Figure 6 by the reference numeral 62. A lower surface of the blank 60 that is opposite to the upper surface 62 is indicated in figure 6 by the reference numeral 64.

The blank 60 may be produced in any appropriate way, for example, by diffusion bonding together multiple layers of titanium, by casting, or by using supper plastic forming or additive manufacturing techniques.

At step s6, under control of the first computer 16, the CMM 14 takes measurements of at least the upper and lower surfaces 62, 64 of the blank 60. The measured CMM data is processed by the first computer 14 and relayed to the processor 30 of the third computer 22.

At step s8, the CNC program 36 is specified and stored in the memory 32.

The CNC program 36 may be specified in any appropriate way. For example, in some embodiments, the processor 30 or a different processing module compares the CMM data generated by measuring the blank 60 to the digital model 34 so as to determine how the blank 60 is to be machined to form the door body 4 and generate the CNC program 36 accordingly. In other embodiments, the CNC program 36 is determined using a specification or model of the blank 60 acquired in a different way e.g. from a source other that the CMM data. In some embodiments, the CNC program 36 is generated by a human operator, such as an NC programmer, instead of automatically by a processor.

At step s10, a protective layer of material is applied to the lower surface 64 of the blank 60. In this embodiment, the protective material is a relatively thin layer of plastic (e.g. cellophane or 3M 8671 HS polyurethane tape) that is stuck to the lower surface 64 using an adhesive or glue.

In this embodiment CMM measurements of the blank 60 are taken before the protective layer is applied to the blank 60. However, in other embodiments, CMM measurements may be taken after the protective layer is applied to the blank, and the thickness of the protective layer may be accounted for.

In this embodiment, the lower surface 64 of the blank 60 is entirely covered by the protective layer. However, in other embodiments, a protective layer is only applied to those areas of the lower surface 64 that are to contact with support members 40.

At step s12, the blank 60 is fixedly coupled to the fixture structure 28.

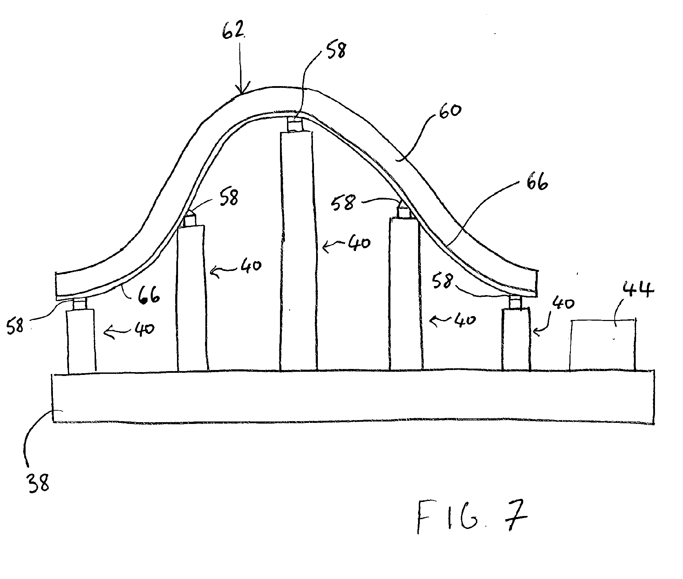

Figure 7 is a schematic illustration (not to scale) showing a side view of the blank 60 fixedly coupled to the fixture system 28.

In this embodiment, the blank 60 is fixed to the fixture system by, firstly, moving the blank 60 such that the lower surface 64 (onto which has been applied the protective layer 66) is complementary to the surface defined by the distal ends of the support members 40. Thus, the assembly comprising the blank 60 and the protective layer 66 is moved into contact with the distal ends of the support members 40. Secondly, the adhesive 58 is allowed to harden, or set, so as to fix the blank 60 to the fixture system 28.

The attachment of the blank 60 to the fixture system 28 may be facilitated, for example, by providing a plurality of location pins or alignment pins that are fixedly attached to the base plate 38. These pins may be received by respective holes in the blank 60 so as to locate the blank 60 in a predetermined position relative to the fixture system 28. In some embodiments, the blank may comprise location pins or alignment pins that are received by holes in the fixture system 28. In some embodiments, the system 28 comprises one or more guide members for guiding the blank 60 onto the fixture system 28 to a predetermined position relative to the fixture system 28.

At step s14, under control of the second computer 20, the surface measurement device 18 takes measurements of the upper surface 62 of the blank 60.

Thus, the processor 30 acquires measurements of the shape of the upper surface 62 of the blank 60, and also positional measurements of the upper surface 62 relative to some reference point. In other words, the processor 30 acquires spatial coordinates specifying the position and orientation of the upper surface 62 of the blank 60 in space. The measured data is processed by the second computer 20 and relayed to the processor 30 of the third computer 22.

At step s16, the processor 30 maps the digital model 34 on to the measurements taken by the CMM 14 and the surface measurement device 18. Thus, an updated digital model 34 is produced.

This mapping process may, for example, be performed as follows.

Firstly, using the measurements of the upper surface 62 taken by the surface measurement device 18, the processor 30 maps the surface of the digital model 34 that corresponds to the upper surface 62 (hereinafter the "digital upper surface") onto the upper surface 62. Thus, the points on the digital upper surface are assigned the same spatial coordinates as the corresponding points on the upper surface 62 of the blank 60. In effect, the digital model 34 is "overlaid" onto the blank 60 by orientating and positioning the digital model 34 such that the surfaces of the digital model 34 are coincident with surfaces of the blank 60.

Secondly, using the measurements taken by the surface measurement device 18 and the CMM data, the processor 30 morphs or deflects the digital model 34 to provide that one or more features of the digital model 34 that are to be machined with a relatively high degree of accuracy are accurately overlaid onto the blank 60. The terminology "relatively high degree of accuracy" is used herein to refer to those features that are to be produced so as to be within a relatively narrow tolerance interval compared to the tolerance intervals associated with other features.

In this embodiment, the digital model 34 includes a chamfer located at an edge of the digital model 34. This chamfer is to be machined with a high degree of accuracy. By way of example, what will now be described is the morphing of the digital model 34 so as to provide that the chamfer is accurately overlaid onto the blank 60. It will be appreciated by those skilled in the art that the chamfer is merely an example feature and the process described herein is equally applicable to one or more different features of the digital model 34.

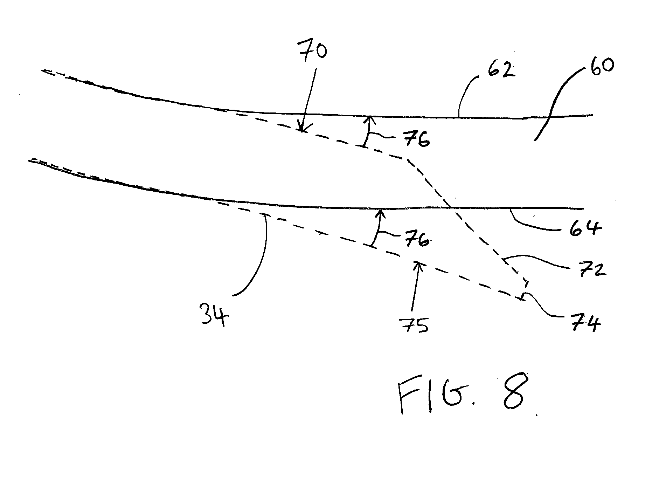

Figure 8 is a schematic illustration (not to scale) showing a portion of the digital model 34 overlaid onto the blank 60. The upper digital surface is indicated in Figure 8 by the reference numeral 70. The chamfer 72 is a bevelled edge that connects the upper digital surface 70 to the edge (or "chamfer landing") 74 of the digital model 34. In this embodiment, the chamfer 72 is inclined to the upper digital surface 70 at an angle of approximately 30°.

To accurately overlay the chamfer 72 and chamfer landing 74, the processor 30 uses the measurements taken by the surface measurement device 18 to determine a position (relative to some reference point) of the upper surface 62 of the blank 60 proximate to the region of the blank 60 that is to be machined to produce the chamfer 72. The processor 30 then uses the CMM data and the determined position of the upper surface 62 of the blank 60 to determine a position (relative to the reference point) of the lower surface 64 of the blank 60 proximate to the region of the blank 60 that is to be machined to produce the chamfer 72. Using the determined positions of the upper and lower surfaces 62, 64 proximate to the region of the blank 60 that is to be machined to produce the chamfer 72 the processor 30 morphs i.e. incrementally changes, the digital model 34 such that the portions of the upper digital surface 70 and the lower digital surface 75 that are proximate to the chamfer 72 are overlaid onto corresponding portions of the upper surface 62 and lower surface 64 respectively. Thus, the portions of the upper digital surface 70 and the lower digital surface 75 that are proximate to the chamfer 72 are assigned the same spatial coordinates as corresponding points on the upper surface 62 and lower surface 64. The morphing of the digital model 34, which may include bending or deflecting portions of the digital model 34, is illustrated in Figure 8 by solid arrows and the reference numeral 76. In some embodiments, only regions of the digital model 34 that are proximate to the chamfer 72 are morphed. In other words, in some embodiments, the morphing of the digital model 34 only occurs locally to the chamfer 72 whereas regions of the digital model 34 remote from the chamfer 72 are unchanged.

In some embodiments, the surface measurement device 18 captures a relatively high number and/or relatively high concentration of measurements of the upper surface 62 proximate to the region of the blank 60 that is to be machined to produce the chamfer 72 compared to the number/concentration of measurements taken at other regions of the upper surface 62. This advantageously tends to provide that the position of the upper surface 62 at those regions may be more accurately determined.

Thus, the chamfer 72 and chamfer landing 74 are overlaid onto the blank 60 with a relatively high degree of accuracy. Thus tends to provide that, when the blank 60 is machined in accordance with the CNC program 36 as described in more detail later below, the chamfer 72 and chamfer landing 74 are produced with a relatively high degree of accuracy.

At step s18, using the updated digital model 34, the processor 30 modifies or updates the CNC program 36 to specify commands for controlling the machining device 26 to machine the blank 60 fixed to the fixture structure 28 into the shape specified by the updated digital model 34 (i.e. so as to produce the door body 4).

Thus, in effect, the CNC program 36 for producing the door body 4 from the blank 60 is mapped onto the blank 60.

At step s20, the processor 30 sends the updated CNC program 36 to the control module 24.

At step s22, the control module 24 controls the machining device 26 in accordance with the CNC program 36 received from the processor 30 to machine the blank 60.

Thus, the machining device 26 is controlled to machine the blank 60, thereby producing the door body 4. Also, the machining device 26 is controlled to machine the lock block 42 so as produce features in the lock block 42 for receiving the lock attachment device 8. Also, the machining device 26 is controlled to machine the hinge blocks 44 so as produce features in the hinge blocks 44 for receiving the hinge attachment device 6.

At step s24, the lock attachment device 8 is coupled to the door body 4. In this embodiment, the machined lock block 42 is used to align the lock attachment device 8 relative to the door body 4 so as to ensure that the lock attachment device 8 is located and orientated as desired.

At step s26, the hinge attachment device 6 is coupled to the door body 4. In this embodiment, the machined hinge blocks 44 are used to align the hinge attachment device 6 relative to the door body 4 so as to ensure that the hinge attachment device 6 is located and orientated as desired.

At step s28, the aircraft door assembly 2 (i.e. the door body 4 with the hinge attachment device 6 and the lock attachment device 8 coupled thereto) is removed from the fixture system 28 by moving the door assembly away from the support members 40 and removing (e.g. peeling away) the protective layer 66 from the lower surface 64.

As the adhesive 58 is not in direct contact with the door body 4, the likelihood of damage to the door body 4 caused by the adhesive 58 when the aircraft door assembly 2 is removed from the fixture system 28 advantageously tends to be reduced or eliminated. Instead, any damage caused by the adhesive 58 tends to be to the sacrificial protective layer 66.

Thus, a process of producing the aircraft door assembly 2 is provided.

After production of the aircraft door assembly 2, the fixture system may be easily reconditioned to receive a further blank. For example, the end bolts 56 may be removed from each of the support members 40 and discarded. New end bolts may then be bolted to the support members and new adhesive applied to the upper surface of the new end bolts. In some embodiments, the removed end bolts 56 may be cleaned to remove hardened adhesive 58, and then re-used. The use of the end bolts 56 that are easily removable from the rest of the fixture system 28 advantageously facilitates the reconditioning of the fixture system 28. The fixture system 28 may be reconditioned more quickly than if, for example, the adhesive 58 was directly applied to a component that was not removable from the rest of the fixture system 28. Reconditioning of the fixture system 28 may further comprise replacing the lock block 42 and/or the one or more of the hinge blocks 44.

The above described fixture system is advantageously capable of securely fixing a position of an object such that deformation, deflection, or other movement of that object is reduced or prevented during a process of machining that object. Furthermore, by using an adhesive to stick the object to the fixture system and by using a protective material to protect the surface of the object from the adhesive, a likelihood of damage to the object tends to be reduced compared to conventional fixture systems (e.g. clamps and the like which may deform the object).

Advantageously, the support members may be arranged so as to contact with an object at or proximate to the areas of that object that are to be machined. For example, the distribution of the support members may be concentrated on the areas of that object that are to be machined. Thus, additional localised support may be provided to drill regions of an object, thereby reducing the likelihood of localised deflection of the object at the areas of that object being machined.

Advantageously, the above described methods and apparatus tend to facilitate machining objects that include features that are produced to be within relatively narrow tolerance intervals.

In the above embodiments, an aircraft door assembly is produced. However, in other embodiments, a different type of object is produced, for example, a panel for an aircraft airframe. The object produced may be made of any appropriate material, for example, carbon fibre.

In the above embodiments, the support members have fixed lengths. However, in other embodiments, the lengths of one or more of the support members are adjustable. By adjusting the relative lengths of the support members, the fixture system may be configured to securely hold different shaped objects. Thus, the use of relatively expensive bespoke fixture systems tends to be advantageously avoided.

In the above embodiments, the process for producing the aircraft door assembly includes the systems and apparatus described above. However, in other embodiments, one or more appropriate different types of system or apparatus may be used instead of or in addition to one or more of the above described systems or apparatuses. For example, in some embodiments, a swarf extraction system is also used which may be integrated into the fixture system.

## Claims

1. An information processing method comprising:
acquiring, by one or more processors (30), measurements of a first surface (62) of a blank (60);
acquiring, by the one or more processors (30), a digital model (34) of an object (4) that is to be produced from the blank (60); and
using the measurements of the first surface (62) of the blank (60), morphing, by the one or more processors (30), at least part of the digital model (34) such that a first surface of the digital model (70) is the same shape as the measured first surface (62) of the blank (60).

2. A method according to claim 1, wherein the step of acquiring the measurements of the first surface (62) comprises:
attaching the blank (60) to a fixture system (28) so as to oppose deflection of the blank (60); and
while the blank (60) is attached to the fixture system (28), measuring, by a surface measurement device (18) operatively coupled to the one or more processors (30), the first surface (62) of the blank (60).

3. A method according to claim 2, wherein:
the fixture system (28) comprises:
a rigid base portion (38); and
a plurality of elongate support members (40), each support member (40) being attached at one end to the base portion (38) and extending away from the base portion (38); and
attaching the blank (60) to a fixture system (28) comprises fixedly attaching, using attachment means, the blank (60) to distal ends of the support members (40).

4. A method according to any of claims 1 to 3, wherein
the method further comprises acquiring, by the one or more processors (30), measurements of a second surface (64) of the blank (60), the second surface (64) of the blank (60) being different to the first surface (62) of the blank (60); and
the step of morphing is performed such that a second surface (75) of the digital model (34) is the same shape as the measured second surface (64) of the blank (60), the second surface (75) of the digital model (34) being different to the first surface (70) of the digital model (34).

5. A method according to claim 4, wherein
the method further comprises acquiring, by the one or more processors (30), a positional relationship between the first surface (62) of the blank (60) and the second surface (64) of the blank (64); and
the step of morphing is performed such that the first surface (70) of the digital model (34) and the second surface (75) of the digital model (34) have the same positional relationship as the first surface (62) of the blank (60) and the second surface (64) of the blank (60).

6. A method according to claim 5, wherein the step of acquiring the positional relationship between the first surface (62) of the blank (60) and the second surface (64) of the blank (60) comprises:
measuring, by a further surface measurement device (14) operatively coupled to the one or more processors (30), the first surface (62) of the blank (60) and the second surface (64) of the blank (60); and
using the measurements taken by the further surface measurement device (14), determining, by the one or more processors (30), the positional relationship between the first surface (62) of the blank (60) and the second surface (64) of the blank (60).

7. A method according to claim 6 when dependent on claim 2, wherein the measurements of the blank (60) taken by the further surface measurement device (14) are taken prior to the blank (60) being attached to the fixture system (28).

8. A method according to any of claims 1 to 7, wherein the step of morphing comprises deflecting the digital model (34).

9. A method according to any of claims 1 to 8, wherein:
only part of the digital model (34) is morphed; and
the part of the digital model (34) that is morphed is at or proximate to a feature (72) of the digital model (34) that corresponds to a feature of the object (4) that is to be within a narrower tolerance interval than a different part of the object (4).

10. A method according to claim 9, wherein the feature (72) of the digital model (34) is a chamfer between two surfaces of the digital model (34).

11. A method according to any of claims 1 to 10, the method further comprising:
using the morphed digital model (34), producing, by the one or more processors (30), instructions for a machining device (26); and
controlling, by a controller (24) operatively coupled to the one or more processors (30), the machining device (26) to machine the blank (60) in accordance with the instructions, thereby producing the object (4).

12. A method according to claim 11, wherein
the method further comprises, using the measurements of the first surface (62), assigning, by the one or more processors (30), a spatial position to the digital model (34); and
the instructions for the machining device (26) are produced using the spatial position assigned to the digital model (34) in addition to the morphed digital model (34) itself.

13. Apparatus for information processing, the apparatus comprising one or more processors (30) arranged to:
acquire measurements of a first surface (62) of a blank (60);
acquire a digital model (34) of an object (4) that is to be produced from the blank (60); and
using the measurements of the first surface (62) of the blank (60), morph at least part of the digital model (34) such that a first surface (70) of the digital model (34) is the same shape as the measured first surface (62) of the blank (60).

14. A program or plurality of programs arranged such that when executed by a computer system or one or more processors it/they cause the computer system or the one or more processors to operate in accordance with the method of any of claims 1 to 12.

15. A machine readable storage medium storing a program or at least one of the plurality of programs according to claim 14.

16. A method of producing an aircraft door (2) or aircraft panel, the method comprising:
acquiring, by one or more processors (30), measurements of a first surface (62) of a blank (60) for the aircraft door (2) or aircraft panel;
acquiring, by the one or more processors (30), a digital model (34) of the aircraft door (2) or aircraft panel;
using the measurements of the first surface (62) of the blank (60), morphing, by the one or more processors (30), at least part of the digital model (34) such that a first surface of the digital model (70) is the same shape as the measured first surface (62) of the blank (60);
using the morphed digital model (34), producing, by the one or more processors (30), instructions for a machining device (26); and
controlling, by a controller (24) operatively coupled to the one or more processors (30), the machining device (26) to machine the blank (60) in accordance with the instructions, thereby producing the aircraft door (2) or aircraft panel.

17. An aircraft door (2) or aircraft panel produced by performing a method according to claim 16.
